# EUROPEAN PATENT APPLICATION

(11) **EP 4 342 624 A1**
(43) Date of publication of application: **27.03.2024**
(21) Application number: 22196550.2
(22) Date of filing: 20.09.2022
(51) Int. Cl.: B23K 33/00

(54) **HEAT EXCHANGER MODULE, HEAT EXCHANGER WELDING METHOD AND HEAT EXCHANGER ASSEMBLY**

(71) Applicant: ALFA LAVAL VICARB, 38120 Fontanil-Cornillon (FR)
(72) Inventor: JOLLEY, Adrian, CALGARY, T3L 0B7 (CA); STENFELDT, Johan, 245 92 STAFFANSTORP (SE); RONDET, Frédéric, FR-38330 SAINT ISMIER (FR)
(74) Representative: Alfa Laval Attorneys

(57) **Abstract**

A heat exchanger module (10) comprising a body (12) having a first inlet surface (14), a first outlet surface, a second inlet surface and a second outlet surface, the body (12) comprising a dividing wall (20) separating a first circuit (18), extending from the first inlet surface (14) to the first outlet surface, from a second circuit (28) extending from the second inlet surface to the second outlet surface, wherein an outer face of the body (12) is provided with at least one groove (40) between an edge (36) of the body and a communication surface (34) selected among the first inlet surface (14), the first outlet surface, the second inlet surface and the second outlet surface.

## Description

### TECHNICAL FIELD

The present disclosure relates to heat exchangers, and more particularly to a heat exchanger module, a heat exchanger welding method and a heat exchanger assembly.

### TECHNOLOGICAL BACKGROUND

Heat exchangers have been known to transfer heat from one fluid to another. For application to large flows, depending on the available manufacturing methods, it may not be possible form the heat exchanger as a single part. In such a case, several heat exchangers modules may be assembled with one another in order to create a bigger heat exchanger. In some applications, the heat exchanger modules should be assembled in series, which raises the issue of assembling the modules with one another in a leak-tight manner without damaging the functional features of the heat exchanger modules. There is a need for a heat exchanger module suitable for at least partially addressing this issue.

### SUMMARY

In this respect, the present disclosure relates to a heat exchanger module comprising a body having a first inlet surface, a first outlet surface, a second inlet surface and a second outlet surface, the body comprising a dividing wall separating a first circuit, extending from the first inlet surface to the first outlet surface, from a second circuit extending from the second inlet surface to the second outlet surface, wherein an outer face of the body is provided with at least one groove between an edge of the body and a communication surface selected among the first inlet surface, the first outlet surface, the second inlet surface and the second outlet surface. In the heat exchanger module, a first fluid may enter the body through the first inlet surface, flow in the first circuit and exit the body through the first outlet surface. Likewise, a second fluid may enter the body through the second inlet surface, flow in the second circuit and exit the body through the second outlet surface. The first fluid and the second fluid never mix but exchange heat through the dividing wall.

The communication surface stands for any surface selected among the first inlet surface, the first outlet surface, the second inlet surface and the second outlet surface. Although one communication surface is described below for the sake of conciseness, the heat exchanger module may have a plurality of communication surfaces, and a groove may be provided correspondingly for each one of them. Likewise, without any loss of generality, one groove will be mentioned below, but a plurality of grooves is encompassed too.

The communication surface opens out onto the outer face of the body on which the groove is provided. The edge of the body may also be an edge of said outer face.

When assembling means, in particular leak tight assembling means such as welding or brazing, are used between the edge and the groove, the groove, which is provided between an edge of the body and a communication surface, provides a buffer room between the assembling means and the communication surface in order to protect the communication surface, e.g. from heat possibly resulting from the use of the assembling means. Accordingly, the heat exchanger module can be assembled in series without damaging the communication surface or any functional feature close thereto.

Optionally, the edge is chamfered. This facilitates welding at the edge.

Optionally, the groove extends across a direction from the edge to the communication surface. Thus, the groove opposes the progression of welding material or the like towards the communication surface. For instance, the groove may be parallel to the edge and/or to a boundary of the communication surface.

Optionally, the groove is defined between two protrusions which protrude beyond the communication surface in a direction normal to the communication surface. The protrusions protrude outwards, i.e. away from the body. Thanks to the protrusions protruding beyond the communication surface in a direction normal thereto, the protrusions may protect the communication surface, e.g. when they abut or face another heat exchanger module to which the heat exchanger module is to assemble. In addition, the protrusions form additional barriers to shield the communication surface from the assembling means.

Optionally, the groove has a bottom portion and lateral portions protruding from the bottom portion, the bottom portion being longer than the lateral portions. That is, the groove may have the general shape of a U, with the bottom portion of the U being longer than the lateral branches of the U. This ensures that the bottom portion provides enough space for the assembling means not to damage the communication surface even if they penetrate the groove. The lateral portions need not be straight, and may protrude from the bottom portion with a continuous radius of curvature. In an example, the groove may have an arc cross-section, e.g. an elliptical-arc cross section.

Optionally, the at least one groove comprises a plurality of grooves forming a closed contour around the communication surface. Thus, assembling means, possibly leak tight assembling means, may be provided all around the communication surface without damaging the communication surface. In this embodiment, a plurality of edges may also form a closed contour around the communication surface.

Optionally, at least one of the first circuit and the second circuit comprises channels delimited by a channel structure, the channel structure being diffusion-bonded or brazed to the dividing wall. Diffusion bonding is an efficient process for assembling components, but the resulting assembly may be heat-sensitive. In particular, a temperature gradient close to the bond between the channel structure and the dividing wall may lead to delamination of that bond. Thanks to the groove, heat - if any - is applied far enough from the communication surface, thus preventing any delamination even if the channel structure and the dividing wall are diffusion bonded. Similar advantages are obtained when the channel structure is brazed to the dividing wall.

Optionally, the first circuit and the second circuit are arranged to form a cross-flow heat exchanger module. In particular, channels of the first circuit may extend transversely to channels of the second circuit. Optionally, the first inlet surface and the first outlet surface are provided on different sides of the body than the second inlet surface and the second outlet surface. This facilitates separating the flows when assembling the heat exchanger module to another heat exchanger module.

The present disclosure is further directed to a method for welding a first heat exchanger module as described above with a second heat exchanger module as described above, the method comprising arranging the first heat exchanger module alongside the second heat exchanger module such that the communication surface of the first heat exchanger module faces the communication surface of the second heat exchanger module, and welding together the facing outer faces of the respective bodies of the first heat exchanger module and the second heat exchanger module at a location between the respective edges and the respective grooves.

In the welding, welding material may be added to the parts to assemble in order to form a weld joining the parts. Otherwise, the parts themselves may bond locally e.g. by locally melting or by other mechanisms. The welding may include brazing.

In the method for welding a first heat exchanger module as described above with a second heat exchanger module as described above, hereinafter referred to as the welding method, the heat exchanger modules may have any or all of the features described herein.

The communication surface of the first heat exchanger module may be the first outlet surface while the communication surface of the second heat exchanger module may be the first inlet surface. Naturally, other arrangements are encompassed.

A location between the respective edges and the respective grooves may include the respective edges. Likewise, the weld may enter the groove (phenomenon known as full-penetration weld), but should neither fill nor cross the groove. Rather, the groove provides a space for possibly entering welding material to be quickly cooled down, which prevents the weld from getting too far inside the groove.

Thanks to the welding method, the first and second heat exchanger modules can be assembled in series without damage.

Optionally, the welding comprises at least one of MIG welding and TIG welding. MIG stands for Metal Inert Gas and is known per se in the art. TIG stands for Tungsten Inert Gas and is known per se in the art.

The present disclosure is further directed to a heat exchanger assembly comprising a first heat exchanger module as described above, a second heat exchanger module as described above, and a weld joining the first heat exchanger module to the second heat exchanger module, wherein the weld extends between the respective edges of the first heat exchanger module and the second heat exchanger module and the respective grooves of the first heat exchanger module and the second heat exchanger module, and the weld stops in or before said respective grooves.

As mentioned above, the heat exchanger modules may have any or all of the features described herein. The heat exchanger assembly may be obtained by the above-described welding method.

### BRIEF DESCRIPTION OF THE DRAWINGS

The invention and advantages thereof will be better understood upon reading the detailed description which follows, of embodiments given as non-limiting examples. This description refers to the appended drawings, wherein:
- Fig. 1 is a perspective view of a heat exchanger module according to a first embodiment;
- Fig. 2 is a cross-sectional view in plane II-II of Fig. 1;
- Fig. 3 is a perspective view of two heat exchanger modules to assemble;
- Fig. 4 is a cross-sectional view in plane IV-IV of Fig. 3, further illustrating the welding of the heat exchanger modules.

### DETAILED DESCRIPTION OF EMBODIMENTS

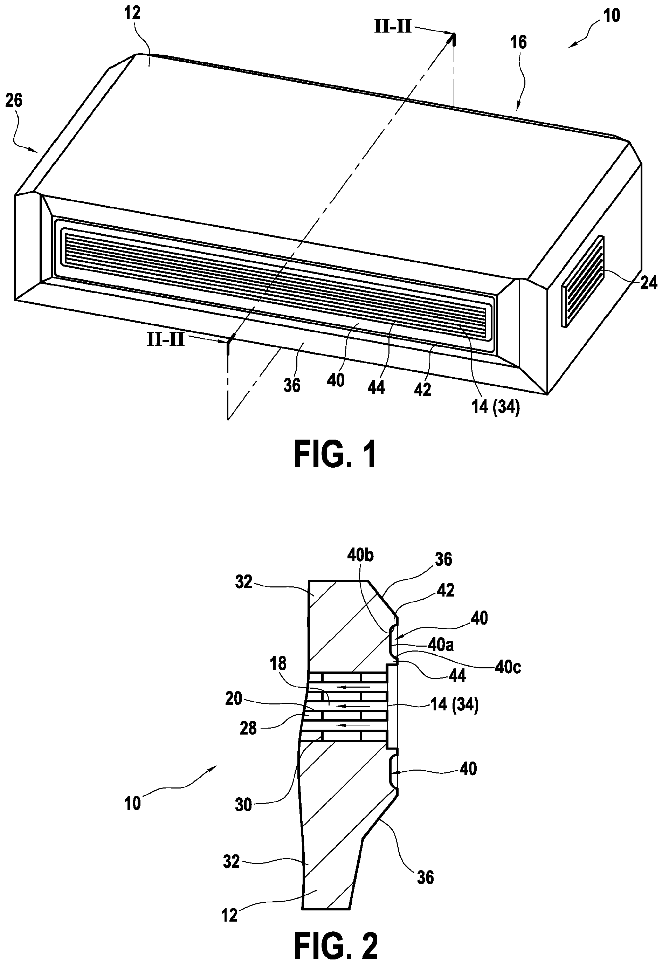

Figure 1 illustrates, in perspective, a heat exchanger module 10 according to a first embodiment. The heat exchanger module 10 comprises a body 12. The body 12 may be delimited by a metallic casing.

As shown, the body 12 has a first inlet surface 14 on a first outer face of the body 12, and a first outlet surface 16 on an opposed outer face of the body 12 (hidden in the figures). Between the first inlet surface 14 and the first outlet surface 16, a first fluid may flow and may be guided by a first circuit 18 (outlined in Fig. 2) extending from the first inlet surface 14 to the first outlet surface 16.

Likewise but independently, the body 12 has a second inlet surface 24 on a second outer face of the body 12, and a second outlet surface 26 on an opposed outer face of the body 12 (hidden in the figures). Between the second inlet surface 24 and the second outlet surface 26, a second fluid may flow and may be guided by a second circuit 28 (outlined in Fig. 2) extending from the second inlet surface 24 to the second outlet surface 26.

Thus, the first inlet surface 14 and the first outlet surface 16 are provided on different sides of the body 12 than the second inlet surface 24 and the second outlet surface 26. For example, in the illustrated embodiment, the body 12 is generally parallelepiped and each of said surfaces 14, 16, 24, 26 is provided on a different outer face of the body 12.

The body 12 further comprises a dividing wall 20 separating the first circuit 18 from the second circuit 28. For instance, as shown in Fig. 2, the first circuit 18 and the second circuit 28 may be arranged as a plurality of alternating layers, wherein adjacent layers are separated by the dividing wall 20. The heat exchanger module 10 may comprise any desired number of layers for each circuit 18, 28, depending on the desired sizing of the heat exchanger module 10.

Thus, in this embodiment, the first inlet surface 14 is formed by a plurality of disjoint openings, each opening corresponding to a layer. In other embodiments, the first inlet surface 14 could be formed of a single opening. Either with a single or a plurality of openings, the first circuit 18 and/or the second circuit 28 may not follow a layered structure. For instance, in a variant, the dividing wall 20 may follow a triply periodic minimal surface, in which case the first circuit 18 and the second circuit 28 would be intertwined.

Besides, in this embodiment, at least one of the first circuit 18 and the second circuit 28 may comprise channels delimited by a channel structure. For instance, Fig. 2 illustrates that the channel structure of the second circuit 28 comprises fins 30 partitioning the second circuit 28 in a plurality of parallel channels. The fins 30 may be part of a corrugated plate obtained by pressing or bending.

The channel structure may be diffusion-bonded to the dividing wall 20. For instance, the heat exchanger module 10 may be obtained by stacking, between two end plates 32, a channel structure for the second circuit 28, a parting plate to form the dividing wall 20, a channel structure for the first circuit 18 as applicable, a parting plate to form the dividing wall 20, and further channel structures and parting plates depending on the desired number of layers. These components may be diffusion-bonded or brazed together. Then, as desired, the resulting heat exchanger module 10 may be machined to its final shape.

However, this does not limit the present disclosure and the heat exchanger module 10 could have other internal features and/or be manufactured in another way.

As shown in Figs. 1 and 2, in this embodiment, the first circuit 18 and the second circuit 28 are arranged to form a cross-flow heat exchanger module. However, the heat exchanger module may be a parallel-flow or counter-flow module, depending on the arrangement of the circuits and the inlet and outlet surfaces.

As indicated above, at least one of the first inlet surface 14, the first outlet surface 16, the second inlet surface 24 and the second outlet surface 26 may serve as a communication surface 34, namely a surface through which the heat exchanger module 10 is to communicate fluid to, for instance, another heat exchanger module. Figure 2 illustrates an example in which the first inlet surface 14 is considered as the communication surface 34, but the following may apply, as an alternative or in addition, to any one of the first outlet surface 16, the second inlet surface 24 and the second outlet surface 26.

The communication surface 34 opens onto an outer face of the body 12. In this embodiment, the outer face is provided with at least one groove 40 between an edge 36 of the body 12 and the communication surface 34.

The edge 36 may be an edge between two different outer faces of the body 12. Besides, the edge 36 may be chamfered.

The groove 40 may extend across a direction from the edge 36 to the communication surface 34. Specifically, with reference to Fig. 2, the direction from the edge 36 to the communication surface 34 is a vertical direction of Fig. 2, and the groove 40 extends perpendicularly to the plane of Fig. 2 (plane II-II in Fig. 1).

The groove 40 may be obtained by machining the outer face onto which the communication surface 34 opens. For instance, the groove 40 may be machined in the end plate 32.

In this embodiment, the groove 40 is generally U-shaped: the groove 40 is defined between two protrusions 42, 44 which protrude beyond the communication surface 34 in a direction normal to the communication surface 34. The protrusions 42, 44 also protrude beyond the edge 36 in said direction. The protrusions 42, 44 define, between them, a bottom portion 40a. Lateral portions 40b, 40c extend from the bottom portion 40a along the protrusions 42, 44 respectively.

As shown in Fig. 2, the bottom portion 40a may be longer than the lateral portions 40b, 40c.

A groove 40 may not only be provided on one side of the communication surface 34, as detailed above, but on two or more, even all, sides of the communication surface 34. For instance, as shown in Fig. 1, a plurality of grooves 40 may form a closed contour around the communication surface 34. That is, the plurality of grooves 40 are in contact with one another. In this embodiment, the protrusions 42, 44 form concentric respective closed contours around the communication surface 34.

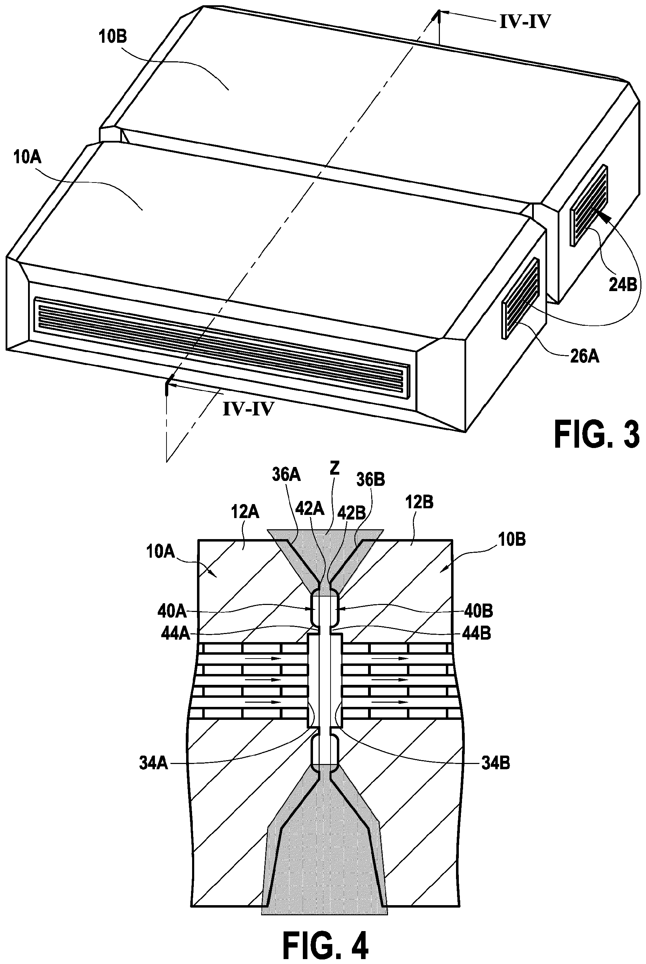

Figure 3 shows, in perspective, how a plurality of heat exchanger modules 10A, 10B can be assembled in series. A heat exchanger welding method and a heat exchanger assembly are now described with reference to Figs. 3 and 4. In this example, the heat exchanger modules 10A, 10B are both identical to the heat exchanger module 10 described above. However, variants are encompassed. For instance, the heat exchanger modules 10A, 10B may differ from each other in many aspects including their size, their channel structure, the location of their inlet and outlet surfaces, etc.

As shown in Figs. 3 and 4, the welding method comprises arranging the first heat exchanger module 10A alongside the second heat exchanger module 10B such that the communication surface 34A of the first heat exchanger module 10A faces the communication surface 34B of the second heat exchanger module 10B. For instance, the communication surface 34A may be the first outlet surface of the first heat exchanger module 10A, while the communication surface 34B may be the first inlet surface of the second heat exchanger module 10B.

In this situation, the groove 40A of the first heat exchanger module 10A may face the groove 40B of the second heat exchanger module 10B. Thus, the respective edges 36A, 36B of the first and second heat exchanger modules 10A, 10B, here chamfered, may form, together, a weld support area for receiving a weld. The weld support area may narrow from an outer side of the respective bodies 12A, 12B to the respective protrusions 42A, 42B which face each other. In other words, the weld support area formed between the facing outer faces of the first and second heat exchanger modes 10A, 10B may have a tapered shape. Note that the first heat exchanger module 10A and the second heat exchanger module 10B may touch or, as illustrated, may be separated by a gap. The gap should be small enough to ensure that the welding material is supported and maintained in the weld support area.

The welding method further comprises welding together the facing outer faces of the respective bodies 12A, 12B of the first heat exchanger module 10A and the second heat exchanger module 10B at a location between the respective edges 36A, 36B and the respective grooves 40A, 40B. Specifically, welding material may be deposited in the weld support area, e.g. along the edges 36A, 36B, in order to join said edges 36A, 36B together. Due to the above-discussed gap, the welding material may partially flow beyond the protrusions 42A, 42B and enter the grooves 40A, 40B, which ensures a complete-joint penetration weld. However, the size of the gap should be determined such that the welding material does not reach the protrusions 44A, 44B of the grooves 40A, 40B which are the closest to the communication surfaces 34A, 34B. The weld not reaching the protrusions 44A, 44B is facilitated when, as described above, the bottom portion 40a of the groove is longer than the lateral portions 40b, 40c of the groove.

For instance, the welding may comprise MIG welding and/or TIG welding. However, alternatives are possible and include brazing, cold metal transfer and submerged arc welding.

During the welding, heat diffuses within the bodies 12A, 12B, and a heat-affected zone Z, outlined in Fig. 4, is created. However, thanks to the grooves 40A, 40B, as can be seen in Fig. 4, the heat-affected zone does not reach the protrusions 44A, 44B of the grooves 40A, 40B which are the closest to the communication surfaces 34A, 34B. Accordingly, the communication surfaces 34A, 34B are duly shielded and the functional features of the first and second heat exchanger modules 10A, 10B are not damaged.

The above-described welding method enables to obtain a heat exchanger assembly comprising the first heat exchanger module 10A, the second heat exchanger module 10B, and a weld joining the first heat exchanger module 10A to the second heat exchanger module 10B. As explained above, the weld extends between the respective edges 36A, 36B of the first heat exchanger module 10A and the second heat exchanger module 10B and the respective grooves 40A, 40B of the first heat exchanger module 10A and the second heat exchanger module 10B, and the weld stops in or before said respective grooves 40A, 40B. In either case, the weld does not reach the protrusions 44A, 44B of the grooves 40A, 40B which are the closest to the communication surfaces 34A, 34B.

Of course, although detailed with respect to two heat exchanger modules 10A, 10B, the welding method may be carried out with more than two heat exchanger modules.

Besides, as shown in Fig. 3, the first and second heat exchanger modules may be fluidly connected to each other in series not only as to the first circuit 18 but also as to the second circuit 28: for instance, appropriate piping may be used to connect the second outlet surface 26A of the first heat exchanger module 10A to the second inlet surface 24B of the second heat exchanger module 10B.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A heat exchanger module (10) comprising a body (12) having a first inlet surface (14), a first outlet surface (16), a second inlet surface (24) and a second outlet surface (26), the body (12) comprising a dividing wall (20) separating a first circuit (18), extending from the first inlet surface (14) to the first outlet surface (16), from a second circuit (28) extending from the second inlet surface (24) to the second outlet surface (26), wherein an outer face of the body (12) is provided with at least one groove (40) between an edge (36) of the body and a communication surface (34) selected among the first inlet surface (14), the first outlet surface (16), the second inlet surface (24) and the second outlet surface (26).

2. The heat exchanger module of claim 1, wherein the edge (36) is chamfered.

3. The heat exchanger module of claim 1 or 2, wherein the groove (40) extends across a direction from the edge (36) to the communication surface (34).

4. The heat exchanger module of any one of claims 1 to 3, wherein the groove (40) is defined between two protrusions (42, 44) which protrude beyond the communication surface (34) in a direction normal to the communication surface (34).

5. The heat exchanger module of any one of claims 1 to 4, wherein the groove (40) has a bottom portion (40a) and lateral portions (40b, 40c) protruding from the bottom portion (40a), the bottom portion (40a) being longer than the lateral portions (40b, 40c).

6. The heat exchanger module of any one of claims 1 to 5, wherein the at least one groove (40) comprises a plurality of grooves forming a closed contour around the communication surface (34).

7. The heat exchanger module of any one of claims 1 to 6, wherein at least one of the first circuit (18) and the second circuit (28) comprises channels delimited by a channel structure, the channel structure being diffusion-bonded or welded to the dividing wall (20).

8. The heat exchanger module of any one of claims 1 to 7, wherein the first circuit (18) and the second circuit (28) are arranged to form a cross-flow heat exchanger module.

9. The heat exchanger module of any one of claims 1 to 8, wherein the first inlet surface (14) and the first outlet surface (16) are provided on different sides of the body (12) than the second inlet surface (24) and the second outlet surface (26).

10. A method for welding a first heat exchanger module (10A) as claimed in any one of claims 1 to 9 with a second heat exchanger module (10B) as claimed in any one of claims 1 to 9, the method comprising arranging the first heat exchanger module (10A) alongside the second heat exchanger module (10B) such that the communication surface (34A) of the first heat exchanger module faces the communication surface (34B) of the second heat exchanger module, and welding together the facing outer faces of the respective bodies (12A, 12B) of the first heat exchanger module and the second heat exchanger module at a location between the respective edges (36A, 36B) and the respective grooves (40A, 40B).

11. The method of claim 10, wherein the welding comprises at least one of MIG welding and TIG welding.

12. A heat exchanger assembly comprising a first heat exchanger module (10A) as claimed in any one of claims 1 to 9, a second heat exchanger module (10B) as claimed in any one of claims 1 to 9, and a weld joining the first heat exchanger module (10A) to the second heat exchanger module (10B), wherein the weld extends between the respective edges (36A, 36B) of the first heat exchanger module and the second heat exchanger module and the respective grooves (40A, 40B) of the first heat exchanger module and the second heat exchanger module, and the weld stops in or before said respective grooves (40A, 40B).
